(19) Europäisches Patentamt
European Patent Office
Office européen des brevets

(11) **EP 4 455 213 A1**

(12) **EUROPEAN PATENT APPLICATION**
published in accordance with Art. 153(4) EPC

(43) Date of publication:
30.10.2024 Bulletin 2024/44

(21) Application number: 21968605.2

(22) Date of filing: 23.12.2021

(51) International Patent Classification (IPC):
C08L 77/06 (2006.01)  C08K 3/22 (2006.01)
D01F 6/90 (2006.01)  D01F 1/10 (2006.01)
C08G 69/28 (2006.01)  D01D 5/08 (2006.01)

(52) Cooperative Patent Classification (CPC):
C08G 69/28; C08K 3/22; C08L 77/06; D01D 5/08;
D01F 1/10; D01F 6/90

(86) International application number:
PCT/CN2021/140881

(87) International publication number:
WO 2023/115462 (29.06.2023 Gazette 2023/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicants:
• Cathay Biotech Inc.
Shanghai 201203 (CN)
• Cibt America Inc.
Newark DE 19713 (US)

(72) Inventors:
• SUN, Chaoxu
Shanghai 201203 (CN)
• CHEN, Wanzhong
Shanghai 201203 (CN)
• GAO, Xiang
Shanghai 201203 (CN)
• LIU, Xiucai
Shanghai 201203 (CN)

(74) Representative: Aera A/S
Niels Hemmingsens Gade 10, 5th Floor
1153 Copenhagen K (DK)

(54) **POLYAMIDE 56 RESIN AND FIBER, PREPARATION METHODS THEREFOR, AND USE THEREOF**

(57) A polyamide 56 resin, a fiber, a preparation method therefor and use thereof are provided. The method for preparing the polyamide 56 resin comprises a step of preparing the polyamide 56 resin from monomers by a polymerization reaction, wherein the polyamide 56 resin contains titanium dioxide, and the titanium dioxide is added during polymerization. The method for preparing the polyamide 56 resin in an embodiment can effectively prevent problems such as monofilament breakage and poor dyeing performance in a subsequent spinning process. In addition, the method is simple and easy to operate, and has a low production cost.

EP 4 455 213 A1

## Description

### Technical field

The present disclosure relates to a polyamide, specifically to a polyamide 56 resin, a fiber, and a preparation method therefor and use thereof.

### Background of Art

Polyamide fiber is one of the earliest industrialized synthetic fibers in the world and plays an important role in the field of synthetic fibers. There are various types of polyamide fibers, but the most widely produced and used industrially today are polyamide 6 and polyamide 66. The main application fields are socks, lace underwears, corsets, athletic undergarments, wedding dresses, casual jackets, sportswears, all-weather coats, outdoor jackets, quick-dry clothes, cotton wadded jackets, outdoor tents, sleeping bags, and mountaineering bags, etc.; and the industrial yarn is widely used in fields such as cord threads, transmission belts, hoses, ropes, fishing nets, tires, and parachutes, etc.

Polyamide fibers are divided into two types depending on whether they contain a dulling agent, i.e., bright fibers and dull fibers. Fabrics made of bright fibers have a more pronounced surface gloss and a strong surface waxy texture, so they are difficult to be used in casual garments and high quality garments with higher requirements. However, fabrics made of dull fibers have advantages such as soft luster close to natural effect, soft hand feel, bright colors, good drape, and strong shading performance, etc., which are increasingly sought after by consumers.

Titanium dioxide ($TiO_2$) is widely used as a dulling material in the field of man-made dull fibers. Currently, the main production method of dull fibers is the on-line addition of dull masterbatch technology. With this method, firstly, the dull masterbatch is added during the spinning process, which requires the spinning mill to be equipped with a masterbatch addition device, resulting in a large production investment; secondly, during the masterbatch addition process, it is necessary to strictly control the masterbatch addition ratio, if the mixing ratio is inappropriate or the mixing is uneven, it is easy to cause poor compatibility between the dull masterbatch and the matrix resin, leading to problems such as monofilament breakage, broken filament, low strength, and poor dyeing, etc., during the spinning process.

A Chinese patent application for invention (Publication No.: CN105986327A) discloses a polyamide 56 fiber and a method for manufacturing the same. The spinning step is carried out by melting and blending a plurality of dull polyamide 6 resin particles and the polyamide 56 resin particles that have undergone the viscosity adjusting step and the moisture adjusting step, and then spinning the resulting mixture at a temperature ranging from 275°C to 285°C to obtain a dull 56 fiber. The above-mentioned patent application uses a polyamide 6 matrix material as a dull masterbatch. In this material, firstly, polyamide 6 has a melting point of about 220°C, while polyamide 56 has a melting point of about 256°C; the large difference in melting point between the two makes it difficult to control the spinning processing conditions properly, which may cause phase separation, resulting in reduced melt viscosity and fiber strength; secondly, in order to prepare polyamide 56 fibers with a high titanium dioxide content, it is necessary to add dull polyamide 6 resin particles with a content of greater than 10% by weight to the polyamide 56 resin particles, which causes poor compatibility and causes problems such as increased broken filaments and broken ends, reduced fiber strength, uneven dyeing, and decreased M rate, etc., during the spinning process.

A Chinese patent application for invention (Publication No.: CN 110054891 A) discloses a dull polyamide 56 masterbatch, a dull fiber, and a preparation method therefor. It is necessary to prepare a dull polyamide 56 masterbatch firstly, and then subject it to blend spinning with polyamide 56 to prepare a dull fiber, which requires a relatively large production investment. The spinning method is carried out by adding the dull masterbatch via blending, it requires uniform addition of masterbatch, otherwise it is prone to problems such as poor compatibility between dull masterbatch and matrix spinning material, resulting in monofilament breakage, poor dyeing, and relatively low M rate, etc.

### Summary of the invention

One of the main objects of the present invention is to provide a polyamide 56 resin comprising titanium dioxide in a content of 0.2 wt% to 5.0 wt%, wherein 98% or more of the titanium dioxide has a dispersed particle size of 0.2 to 0.6 μm.

One embodiment of the present invention further provides a method for preparing the polyamide 56 resin comprising a step of preparing a polyamide 56 resin from monomers by a polymerization reaction, wherein the polyamide 56 resin comprises titanium dioxide, and the titanium dioxide is added during the polymerization reaction.

One embodiment of the present invention further provides a polyamide 56 fiber prepared by melt spinning the aforementioned polyamide 56 resin, or by direct spinning the melt produced during the preparation process of the polyamide 56 resin.

One embodiment of the present invention further provides a method for preparing the aforementioned polyamide 56 fiber, comprising the steps of:

(a) heating the polyamide 56 resin to a molten state to obtain a polyamide 56 melt;

(b) conveying the polyamide 56 melt into a spinning box, injecting it into a spin pack, and extruding it through a spinneret orifice to form an as-spun fiber;

(c) subjecting the as-spun fiber to a cooling treatment, an oiling treatment, a drawing treatment, and a winding treatment to obtain a polyamide 56 pre-oriented yarn; and

(d) subjecting the polyamide 56 pre-oriented yarn to a hot drawing treatment via a first roller, followed by cooling and setting, and passing it through a false twister, a second roller, an interlacer, and subjecting it to an oiling treatment and a winding treatment to obtain the polyamide 56 fiber.

One embodiment of the present invention further provides use of the aforementioned polyamide 56 fiber in knitted or woven fabrics.

The method for preparing the polyamide 56 resin in one embodiment of the present invention can effectively prevent problems such as monofilament breakage and poor dyeing performance, etc., in a subsequent spinning process. In addition, the method is simple and easy to operate and has a low production cost.

**Detailed description**

Typical embodiments that embody the features and advantages of the present invention are described in detail in the following descriptions. It should be understood that the present invention may have various variations in different embodiments, all of which do not depart from the scope of the present invention, and that the descriptions therein are essentially for illustrative purposes rather than to limit the present invention.

One embodiment of the present invention provides a method for preparing the polyamide 56 resin comprising a step of preparing the polyamide 56 resin from monomers by a polymerization reaction, wherein the polyamide 56 resin comprises titanium dioxide, and the titanium dioxide is added during the polymerization reaction.

In a method of one embodiment of the present invention, titanium dioxide is added for in-situ polymerization during the polymerization reaction of polyamide 56, so that the titanium dioxide can be uniformly distributed in the polyamide 56 resin, which can effectively prevent problems such as monofilament breakage and poor dyeing performance, etc., in a subsequent spinning process. In addition, the preparation method is simple and easy to operate, and has a low production cost.

In a method of one embodiment of the present invention, $TiO_2$ is directly added for in-situ polymerization during polymerization. The operation of this method is relatively simple and easy to control without the need for an additional masterbatch addition device, which can reduce production investment. In addition, by adding $TiO_2$ during polymerization, $TiO_2$ and resin can be mixed for a longer period of time, making $TiO_2$ dispersion in the matrix resin more uniform, resulting in less monofilament breakage and broken filament during the subsequent spinning process, high fiber strength and good dyeing performance.

In one embodiment, the titanium dioxide powder added during the polymerization of polyamide 56 may have a particle size of 0.15 to 0.5 μm, preferably 0.15 to 0.4 μm, more preferably 0.15 to 0.3 μm, for example, 0.18 μm, 0.20 μm, 0.22 μm, 0.23 μm, 0.25 μm, 0.27 μm or 0.28 μm.

Wherein, titanium dioxide can be added to the polymerization system of polyamide 56 in the form of particles or in the form of titanium dioxide slurry.

In one embodiment, titanium dioxide is added in an amount of 0.2 wt% to 5.0 wt%, preferably 0.2 wt% to 3.0 wt%, of the total weight of polyamide 56 resin.

In one embodiment, the raw materials for producing polyamide 56 resin comprise at least 1,5-pentanediamine and adipic acid, or the polyamide 56 resin is obtained by polymerization of 1,5-pentanediamine and adipic acid as monomers.

In one embodiment, 1,5-pentanediamine is prepared from bio-based raw materials through fermentation or enzymatic transformation.

In the method for preparing polyamide 56 resin according to an embodiment of the present invention, materials of non-petroleum origin are used as raw materials, such as materials of bio-based origin, which do not cause significant pollution and are beneficial for environmental protection.

In one embodiment, the method for preparing polyamide 56 resin comprises the steps of:

(1) preparing a polyamide 56 salt solution;

(2) carrying out polymerization using the polyamide 56 salt solution as a raw material to obtain a polyamide 56 melt; and

(3) filtering the polyamide 56 melt through a melt filter, and finally pelletizing and drying it to obtain the polyamide 56 resin.

In one embodiment, titanium dioxide may be added at any one or more stages in steps (1) and (2).

In one embodiment, step (1) comprises: mixing 1,5-pentanediamine, adipic acid and water uniformly under nitrogen conditions to obtain a polyamide 56 salt solution.

In one embodiment, the molar ratio of 1,5-pentanediamine to adipic acid may be (1-1.08) : 1, for example 1.02 : 1, 1.04 : 1, 1.05 : 1 or 1.06 : 1, etc.

In one embodiment, step (2) comprises heating the polyamide 56 salt solution to raise the pressure inside the reaction system to 0.3 ~ 2.4 MPa (gauge pressure), maintaining the pressure for 0.2 ~ 2.5 hours by degassing, and then depressurizing the reaction system to a pressure of 0 ~ 0.3 MPa (gauge pressure), and then vacuuming the reaction system to a vacuum degree of -0.001 MPa to -0.08 MPa (gauge pressure) to obtain the polyamide 56 melt.

In one embodiment, the reaction system has a temperature of 230 ~ 265°C, for example 235°C, 240°C, 245°C, 250°C or 255°C, etc., at the end of the pressure maintenance in step (2).

In one embodiment, in step (2), the pressure is maintained for 0.5 ~ 2 hours, preferably 0.5 ~ 1.5 hours, for example 0.8 hour, 1 hour or 1.2 hours.

In one embodiment, the reaction system has a temperature of 240 ~ 275°C, for example 245°C, 250°C, 255°C, 260°C, 265°C or 270°C, etc, at the end of the depressurization in step (2).

In one embodiment, the reaction system has a temperature of 250 ~ 285°C, for example 255°C, 260°C, 265°C, 270°C, 275°C or 280°C, etc, after the vacuumization in step (2).

In one embodiment, the vacuum degree is maintained for 10-50 minutes, preferably 15 ~ 45 minutes after the vacuumization in step (2).

In one embodiment, a second additive can be added to the reaction system, which can be added at any one or more stages in step (1) and step (2). The second additive may or may not be added at the same time as titanium dioxide.

In one embodiment, the second additive may include one or more of a flame retardant, an antioxidant, an end capping agent, an ultraviolet absorber, an infrared absorber, a nucleating agent, a fluorescent whitening agent and antistatic agents.

In one embodiment, the second additive is added in an amount of 0% to 1%, for example 0.05%, 0.1%, 0.2%, 0.4%, 0.5%, 0.6% or 0.8%, etc., of the total weight of the raw materials for producing the polyamide 56 resin.

In one embodiment, after drying in step (3), the polyamide 56 resin has a moisture content of 300 ~ 1000 ppm, preferably 300 ~ 800 ppm, and more preferably 600 ~ 800 ppm.

In one embodiment, in step (3), drying may be carried out at a temperature of 80 ~ 130°C, preferably 100 ~ 110°C, for example 90°C, 95°C, 98°C, 102°C, 104°C, 105°C, 106°C, 108°C, 115°C, 120°C or 125°C, etc.

In one embodiment, in step (3), drying may be carried out for 10 ~ 30 hours, preferably 15 ~ 25 hours, for example 12 hours, 16 hours, 18 hours, 20 hours, 22 hours, 24 hours or 28 hours, etc.

In one embodiment, in step (3), a melt filter is used for filtration prior to pelletization to remove large size particles resulting from $TiO_2$ agglomeration during polymerization, which may result in small particle size and narrow size distribution of titanium dioxide in the polyamide 56 resin, and may further improve the uniformity of the polyamide 56 melt, thereby avoiding the phenomenon of monofilament breakage and more broken filaments caused by excessive particle size during the drawing process, and the impact on the mechanical properties and dyeing performance of the fiber, resulting in less monofilament breakage during the subsequent spinning process and improved dyeing performance.

In one embodiment, after filtration through the melt filter, titanium dioxide in the dull polyamide 56 resin has a dispersed particle size of 0.2 ~ 1.0 $\mu$m, preferably 98% or more of the titanium dioxide particles have a dispersed particle size of 0.2 ~ 0.6 $\mu$m, and more preferably 95% or more of the titanium dioxide particle have a dispersed particle size of 0.2 ~ 0.35 $\mu$m.

In one embodiment, the melt filter has a mesh size of 5 ~ 15 $\mu$m.

In a method for preparing polyamide 56 resin according to one embodiment of the present invention, $TiO_2$ is used for in-situ polymerization to prepare a dull polyamide 56 resin. By strictly controlling the particle size and distribution of $TiO_2$ particles, agglomerated $TiO_2$ particles can be avoided or removed, the particle size distribution can be narrowed, and the spinning performance can be improved.

One embodiment of the present invention provides a polyamide 56 resin which can be prepared by the aforementioned method.

One embodiment of the present invention provides a polyamide 56 resin having a relative viscosity of 2.3 ~ 3.0, preferably 2.5 ~ 2.8, an oligomer content of 1.5 wt% or less, preferably 1 wt% or less, and more preferably 0.8 wt% or less, for example 0.3 wt% ~ 1.0 wt%, and 0.3 wt% ~ 0.8 wt%, etc; a moisture content of 300 ~ 1000 ppm, preferably 300 ~ 800 ppm, and more preferably 600 ~ 800 ppm; a number average molecular weight of 15000 ~ 42000, preferably 18000 ~ 35000; and a molecular weight distribution of 1.2 ~ 2.0, preferably 1.4 ~ 1.8. The oligomer described in the present invention has a polymerization degree of 5 or less.

The polyamide 56 resin according to one embodiment of the present invention has a low oligomer content, a narrow polyamide resin molecular weight distribution and a moderate viscosity.

In one embodiment, the polyamide 56 resin may have a relative viscosity of 2.4, 2.5, 2.6, 2.7, 2.8 or 2.9, etc.

In one embodiment, the polyamide 56 resin may have a moisture content of 350 ppm, 550 ppm, 650 ppm, 700 ppm, 750 ppm, 850 ppm or 900 ppm, etc.

In one embodiment, the polyamide 56 resin may have a number average molecular weight of 16000, 20000, 22000, 25000, 28000, 30000, 32000, 34000, 38000 or 40000, etc.

In one embodiment, the polyamide 56 resin may have a molecular weight distribution of 1.3, 1.5, 1.6, 1.7 or 1.9, etc.

In one embodiment, the oligomer content of the polyamide 56 resin may be 0.3%, 0.6% or 1.0%. The polymerization degree of the oligomer described in the present invention is 10 or less. If the oligomer content in the resin is too high, the oligomer will precipitate and coagulate under the spinneret during spinning, and excessive precipitation will affect the spinning process, resulting in monofilament breakage during spinning and shortening the spin pack life.

In one embodiment, the polyamide 56 resin comprises a titanium dioxide dulling agent.

In one embodiment, the polyamide 56 resin can be a semi-dull polyamide 56 resin, a dull polyamide 56 resin, or a full dull polyamide 56 resin.

In one embodiment, the polyamide 56 resin is a semi-dull polyamide 56 resin having a titanium dioxide content of 0.2 wt% ~ 0.4 wt%, preferably 0.25 wt% ~ 0.35 wt%, for example 0.3 wt%.

In one embodiment, the polyamide 56 resin is a full dull polyamide 56 resin having a titanium dioxide content of 1.2 wt% ~ 2.0 wt%, preferably 1.4 wt% ~ 1.8 wt%, for example 1.5 wt%, 1.6 wt% or 1.7 wt%.

In one embodiment, the polyamide 56 resin is an ultra dull polyamide 56 resin having a titanium dioxide content of 2.5 wt% ~ 5.0 wt%, preferably 3.0 wt% ~ 4.5 wt%, for example 2.8 wt%, 3.2 wt%, 3.5 wt%, 4.0 wt%, 4.2 wt%, 4.4 wt%, and 4.8 wt%.

In one embodiment, the dispersed particle size of titanium dioxide in the polyamide 56 resin is 0.2 ~ 1.0 $\mu$m. Further, the titanium dioxide particles having a dispersed particle size of 0.2 ~ 0.6 $\mu$m account for 98% or more, and further, the titanium dioxide particles having a dispersed particle size of 0.2 ~ 0.6 $\mu$m account for 98.5% or more. Further, the titanium dioxide particles having a dispersed particle size of 0.2 ~ 0.35 $\mu$m account for 95% or more, and further, the titanium dioxide particles having a dispersed particle size of 0.2 ~ 0.35 $\mu$m account for 96% or more. Wherein, the percentage content of titanium dioxide hereinbefore refers to the percentage content in terms of particle number of titanium dioxide particles.

One embodiment of the present invention provides a polyamide 56 fiber, which can be prepared by melt spinning the aforementioned polyamide 56 resin.

In one embodiment, the polyamide 56 fiber can be a semi-dull polyamide 56 fiber, a dull polyamide 56 fiber, and a full dull polyamide 56 fiber. Among them, the semi-dull polyamide 56 fiber, the dull polyamide 56 fiber, and the full dull polyamide 56 fiber can be obtained by melt spinning the semi-dull polyamide 56 resin, the dull polyamide 56 resin, and the full dull polyamide 56 resin, respectively.

In one embodiment, the polyamide 56 fiber includes undrawn yarn (UDY), fully drawn yarn (FDY), pre-oriented yarn (POY), highly oriented yarn (HOY), fully-oriented yarn (FOY), draw textured yarn (DTY), bulked continuous filament (BCF), monofilament, staple fiber, and industrial yarn, preferably pre-oriented yarn (POY) and draw textured yarn (DTY). Draw textured yarn is also known as drafting false-twist yarn or stretcher strain yarn.

The polyamide 56 fiber of one embodiment of the present invention has advantages such as high strength, low-temperature dyeability, moisture absorption, softness, wear resistance and high elasticity, etc., and has broad development prospects in the field of civil yarn and industrial yarn.

In one embodiment, the polyamide 56 fiber may have a filament fineness of 0.5 ~ 5.0 dtex, preferably 0.8 ~ 4.0 dtex, more preferably 1.2 ~ 3.0 dtex, and even more preferably 1.2 ~ 2.0 dtex, for example 1.0 dtex, 1.5 dtex, 1.8 dtex, 2.5 dtex, 3.5 dtex or 4.5 dtex, etc.

In one embodiment, the polyamide 56 fiber may have breaking strength of 3.3 ~ 5.5 cN/dtex, preferably 3.5 ~ 4.8 cN/dtex, more preferably 3.7 ~ 4.5 cN/dtex, and even more preferably 3.9 ~ 4.2 cN/dtex.

In one embodiment, the polyamide 56 fiber has a coefficient of variation of the breaking strength of 5.0% or less, preferably 3.0% or less, more preferably 2.5% or less, and even more preferably 2.0% or less.

In one embodiment, the polyamide 56 fiber has an initial modulus of 15 ~ 35 cN/dtex, preferably 22 ~ 33 cN/dtex, more preferably 24 ~ 30 cN/dtex, and even more preferably 26 ~ 28 cN/dtex.

In one embodiment, the polyamide 56 fiber may have a shrinkage in boiling water of 7% or less, preferably 6.8% or less, more preferably 6.5% or less, and even more preferably 6.0% or less.

In one embodiment, the polyamide 56 fiber may have a moisture regain of 4.0% or more, preferably 4.5% or more, more preferably 5.0% or more, and even more preferably 5.5% or more.

In one embodiment, the polyamide 56 fiber may have a crimp contraction of 35% ~ 60%, preferably 40% ~ 58%, and more preferably 45% ~ 55%.

In one embodiment, the polyamide 56 fiber may have a crimp stability of 38% ~ 58%, preferably 40% ~ 56%, more preferably 48% ~ 54%, for example 45%, 50% or 52%.

In one embodiment, the polyamide 56 fiber may have a dyeing uniformity (grey scale) of 3.5 grade or more, preferably 4.0 grade or more, more preferably 4.5 grade or more, and even more preferably 5.0 grade or more.

In one embodiment, the polyamide 56 fiber may have an M rate of 92% or more, preferably 94% or more, more preferably 96% or more, and even more preferably 98% or more.

In one embodiment, the soaping fastness of the polyamide 56 fiber: the fading fastness may be 3.5 grade or more, preferably 4.0 grade or more, more preferably 4.5 grade or more, and even more preferably 5.0 grade or more; and the staining fastness may be 3.5 grade or more, preferably 4.0 grade or more, more preferably 4.5 grade or more, and even more preferably 5.0 grade or more.

One embodiment of the present invention provides a method for preparing the aforementioned polyamide 56 fiber, comprising the following steps:

(a) heating the polyamide 56 resin to a molten state to form a polyamide 56 melt;

(b) conveying the polyamide 56 melt through a melt pipeline into a spinning box, accurately metering it by a metering pump, then injecting it into a spin pack, and extruding it at high-pressure through the spinneret orifice to obtain the as-spun fiber;

(c) subjecting the extruded as-spun fiber to cooling, oiling, drawing, and winding to obtain a polyamide 56 pre-oriented yarn; and

(d) passing the polyamide 56 pre-oriented yarn through a yarn guide to a first roller, passing it through a twist stopper and subjecting it to hot drawing in a first hot box, then cooling and setting it by a cooling plate, and passing it through a false twister, a second roller, and an interlacer, then subjecting it to oiling and winding to obtain the polyamide 56 draw textured yarn.

In one embodiment, the heating in step (a) is carried out using a screw extruder, wherein the temperature in zone 1 may be 245 ~ 265°C, preferably 250 - 260°C; the temperature in zone 2 may be 260 ~ 280°C, preferably 265 ~ 275°C; the temperature in zone 3 may be 275 ~ 285°C, preferably 278 ~ 283°C; and the temperature in zone 4 may be 280 ~ 290°C.

In one embodiment, the spinning box in step (b) may have a temperature of 278 ~ 290°C, preferably 282 ~ 285°C; and the spin pack may have a pressure of 13 ~ 22 MPa, preferably 15 ~ 18 MPa.

In one embodiment, the cooling in step (c) includes cooling with quench air and cross air blow, preferably cooling with cross air blow; the air speed may be 0.3 ~ 0.8 m/s, preferably 0.45 ~ 0.6 m/s; the air temperature may be 18 ~ 23°C; and the air humidity may be 50% ~ 85%, preferably 55% ~ 70%.

In one embodiment, the oiling in step (c) is carried out by nozzle oiling; the oiling rate may be 0.4 wt% ~ 0.6 wt%, preferably 0.45 wt% ~ 0.55 wt%; and the oiling height may be 80 ~ 150 cm, preferably 90 ~ 130 cm, and more preferably 95 ~ 110 cm.

In one embodiment, the winding speed during the winding in step (c) may be 4000 ~ 5000 m/min, preferably 4200 ~ 4800 m/min, and more preferably 4300 ~ 4500 m/min; and the overfeeding speed may be 10 ~ 100 m/min, and more preferably 20 ~ 80 m/min.

In one embodiment, the draw ratio in the hot drawing in step (d) may be 1.1 ~ 1.4, preferably 1.15 ~ 1.35; and the temperature for the hot drawing may be 160 ~ 210°C, preferably 170 ~ 205 °C, and more preferably 180 ~ 195°C.

In one embodiment, the speed ratio D/Y of the false twister in step (d) may be 1.3 ~ 2.2, preferably 1.5 ~ 2.0; the pressure of the compressed air inside the interlacer may be 0.3 ~ 1.5 MPa, preferably 0.4 ~ 1.2 MPa, and more preferably 0.5 ~ 1.0 MPa.

In one embodiment, the oiling in step (d) is carried out by nozzle oiling; the oiling rate may be 2.2 wt% ~ 2.8 wt%, preferably 2.3 wt% ~ 2.6 wt%.

In one embodiment, the winding speed during winding in step (d) may be 300 ~ 800 m/min, preferably 400 ~ 700 m/min; and the overfeeding ratio of winding during winding is 1% ~ 8%, preferably 1.5% ~ 6%, and more preferably 2% ~ 5%.

In one embodiment of the present invention, the raw materials for the production of polyamide 56 fiber can be prepared by a biological method, which are green materials that are independent of petroleum resources and do not cause serious environmental pollution, while they can reduce carbon dioxide emissions and reduce the generation of the greenhouse effect.

The polyamide 56 fiber of one embodiment of the present invention can be produced using conventional spinning equipment for polyamide 6 and polyamide 66, without the need to renovate the spinning equipment. By optimizing the quality and spinning process of the polyamide 56 fiber resin, the production yield can be improved.

The polyamide 56 fiber of one embodiment of the present invention has good mechanical properties, dimensional stability, moisture absorption, and dyeing performance, and a good dulling effect when applied to knitted or woven fabrics.

One embodiment of the present invention provides use of the aforementioned polyamide 56 fiber in knitted or woven fabrics. Wherein, the polyamide 56 fabric may have a light transmittance of 50% or less, preferably 48% or less, more preferably 35% or less, and even more preferably 30% or less.

In one embodiment, the polyamide 56 fiber has high strength, softness, moisture absorption, bulkiness (crimp stability), good dyeability and dulling performance, making it more suitable for use in the knitwear and civilian clothing. The non-limiting examples of knitted and woven applications include underwears, shirts, suits, yoga clothes, down jackets, outdoor jackets, socks, suitcases and bags, curtains, shoe materials, embroidery thread, trademarks, sofa cloths, workwears, sportswears, and elastic bands, etc.

The fabric prepared from the polyamide 56 fiber of one embodiment of the present invention has good dulling performance, and the dulling effect is better than that of polyamide 6 fiber and polyamide 66 fiber when containing the same content of $TiO_2$. In addition, a lower content of $TiO_2$ is required to be added when preparing polyamide 56 fabric with the same dulling effect, which can reduce the production cost.

The light transmittance of the semi-dull polyamide 56 fabric of one embodiment of the present invention may be 48% or less, the light transmittance of the full dull polyamide 56 fabric may be 33% or less, and the light transmittance of the ultra dull polyamide 56 fabric may be 25% or less.

**EXAMPLES**

The polyamide 56 resin, polyamide 56 fiber, and preparation method therefor in one embodiment of the present invention will be further described below in conjunction with specific examples. Among them, unless otherwise stated, all the raw materials used are commercially available, the details of the relevant tests involved are as follows; in addition, the parameters involved in the present invention are all measured according to the following method.

1) Fineness:
The fineness is determined according to GB/T 14343.
2) Breaking strength and modulus
The breaking strength can be determined with reference to GB/T 14344-2008, "Testing Method for Tensile of Man-made Filament Yarns", under conditions of applying a pre-tension of $0.05 \pm 0.005$ cN/dtex, a clamping distance of 500 mm and a drawing speed of 500 mm/min; modulus=breaking strength at 1% elongation at break $\times 100$.
3) The method for determining moisture regain includes placing the washed fiber in a loose state in an oven for drying, and then placing the oven-dried fiber sample in the standard atmosphere as specified in GB/T6529 for humidification to balance; conducting the moisture regain determination by the moisture regain determination method specified in GB/T6503 in an oven at an oven-drying temperature of 105°C for oven-drying.
4) Shrinkage in boiling water
The shrinkage in boiling water is determined according to GB/6505, with a pre-tension of $0.05 \pm 0.005$ cN/dtex.
5) Dyeing uniformity (grey scale)/grade:
The dyeing uniformity is determined according to FZ/T 50008 "Test method for dyeing uniformity of polyamide filament yarns", under a condition of 98°C for 30 minutes.
6) Moisture content of resin
The moisture content is determined by Karl-Fischer moisture titrator.
7) Crimp contraction and crimp stability: they are determined according to GB/T 6506-2001, "Test method for crimp contraction properties of textured filament yarns".
8) Soaping fastness
The soaping fastness is determined according to GB/T 3921.1-1997.
9) The relative viscosity of resin is determined by a concentrated sulfuric acid method using the Ubbelohde viscometer: $0.25 \pm 0.0002$ g of dried polyamide resin chips are accurately weighted, dissolved by adding 50 mL of concentrated sulfuric acid (96wt%), and the flowing time of concentrated sulfuric acid ($t_0$) and the flowing time of polyamide sample solution (t) in thermostatic water bath at a temperature of 25°C are measured and recorded.

$$\text{Calculation formula of viscosity number: Relative viscosity} = t/t_0;$$

T - Flowing time of the solution;
$t_0$ - Flowing time of the solvent.

10) The number average molecular weight and molecular weight distribution of resin are determined by gel permeation chromatography (GPC).
11) The dispersed particle size of titanium dioxide is determined and counted from images of transmission electron microscopy of polyamide resin chips.
12) M rate: M rate=((weight of fibers with dyeing uniformity of 4.5 grade or more)/total weight of all dyed fibers)×100%.

13) Dulling performance: The fibers obtained from the examples and comparative examples are woven using the same air jet loom, rinsed using an open soaper, and dyed using a liquid flow dyeing machine to produce fabrics of uniform specification. A special inspection group (10 panelists) is formed to visually evaluate the fabrics for extinction performance grades and the average value is calculated. That is, the surface dulling performance of the fabrics is compared under conditions of halogen lamps simulating sunlight and a temperature of 25°C, and the evaluation grades of dulling performance are divided into grades 1, 2, 3, 4, and 5, indicating the dulling performance from low to very high, respectively.

14) Light transmittance is determined by an ultraviolet and visible spectrophotometer with a scanning wavelength of 300 to 800 nm, the light transmittance of fabrics refers to the light transmittance at a wavelength of 550 nm.

15) Production yield of fiber: Production yield = (weight of the fiber product obtained/total weight of the resin charged) × 100%.

16) Test for oligomer content in resin:

The polyamide sample is dried in a blasting oven at 130°C for 7 hours, then placed in an aluminum-plastic bag, sealed and cooled in a dryer, then 2 g of the polyamide sample is accurately weighed, and placed in a 250 mL round-bottom flask, 100 mL of water is added. The resulting mixture is heated to reflux at 100°C for 24 hours using a heating jacket, then the polyamide sample is taken out and washed three times with pure water and the polyamide sample is dried in a blasting oven at 130°C for 7 hours, then transferred to an aluminum-plastic bag that is previously weighed, sealed and then placed in a dryer for cooling. The total weight of the aluminum-plastic bag and the polyamide sample as well as the weight of the aluminum plastic bag are weighed, respectively, and the latter is subtracted from the former to obtain the weight of the polyamide sample after water boiling, and the oligomer content is calculated from the difference in weights of the polyamide sample before and after water boiling. Duplicate samples are taken from each sample for testing.

17) Test for titanium dioxide content in resin is carried out by calcination method: 10 g of sample is placed in a crucible and calcined in a muffle furnace at 480°C for 10 hours, the weight of the residue in the crucible is weighed.

18) Test for the coefficient of variation (CV) of breaking strength is carried out according to GB/T 14344-2008 "Testing Method for Tensile of Man-made filament Yarns". If titanium dioxide is evenly distributed in the fibers, different numbers of fibers would break simultaneously during the drawing process, and the corresponding breaking strengths at break would be consistent, reflecting a small coefficient of variation.

19) Broken filament times: During the process of preparing polyamide fibers from as-spun fibers, the broken filament times are manually counted.

## Example 1

**Preparation of Polyamide 56 resin**

(1) Under nitrogen conditions, 1,5-pentanediamine, adipic acid, and water were mixed evenly to prepare a polyamide 56 salt solution, wherein the molar ratio of 1,5-pentanediamine to adipic acid was 1.05 : 1.

(2) Titanium dioxide with a particle size of 0.2 $\mu$m was added to the polyamide 56 salt solution, the salt solution system was heated to raise the pressure inside the reaction system to 2.4 MPa, then the pressure was maintained for 1.2 hours by degassing, then the pressure inside the reaction system was depressurized to 0 MPa (gage pressure), and then vacuumized it to a vacuum degree of -0.04 MPa. The above vacuum degree was maintained for 35 minutes to obtain a polyamide 56 melt, wherein the amount of titanium dioxide added was 0.27 wt% of the mass of the resin prepared without adding titanium dioxide under the same conditions. The temperature of the reaction system at the end of the pressure maintenance was 260°C, the temperature of the reaction system after completion of depressurization was 275°C, and the temperature of the reaction system after vacuumization was 280°C.

(3) The polyamide 56 melt was filtered through a melt filter with a mesh size of 10 $\mu$m, which was then pelletized and dried to obtain the polyamide 56 resin, wherein the drying treatment was carried out at 110°C for 20 hours.

**Preparation of polyamide 56 fiber**

(a) The polyamide 56 resin prepared above was heated to a molten state in a screw extruder to form a polyamide 56 melt, where the temperature in zone 1 was 253°C, the temperature in zone 2 was 266°C, the temperature in zone 3 was 278°C, and the temperature in zone 4 was 288°C.

(b) The polyamide 56 melt was delivered to the spinning box through a melt pipeline, and accurately metered by a metering pump, then injected into the spin pack, and extruded at high-pressure through a spinneret orifice, wherein the temperature of the spinning box was 285°C, and the pressure of the spin pack was 16.2 MPa.

(c) The extruded as-spun fiber was subjected to cooling, oiling, drawing, and winding to obtain a polyamide 56 pre-oriented yarn; wherein, the cooling was carried out using cross air blow at an air speed of 0.48 m/s, an air temperature of 20°C and an air humidity of 80%; the oiling was carried out by nozzle oiling at an oiling rate of 0.5 wt% and an oiling height of 110 cm; the winding speed during the winding process was 4300 m/min, and the overfeeding speed was 60 m/min.

(d) The polyamide 56 pre-oriented yarn was guided through a yarn guide to a first roller, passed through a twist stopper and subjected to hot drawing in the first hot box, then cooled and set using a cooling plate, and passed through a false twister, a second roller, and an interlacer, then subjected to nozzle oiling and wound to obtain the polyamide 56 draw textured yarn;

Wherein, the draw ratio of the hot drawing was 1.3, and the temperature of the hot drawing was 185°C; the speed ratio D/Y of the false twister was 1.8; the pressure of the compressed air inside the interlacer was 0.8 MPa; the oiling was carried out by nozzle oiling with an oiling rate of 2.5 wt%; the winding speed during the winding was 600 m/min, and the winding overfeeding speed during winding was 2.5%.

**Example 2**

**Preparation of Polyamide 56 resin**

The polyamide 56 resin was prepared using essentially the same raw materials and processes as Example 1, the difference only lied in that the addition amount of titanium dioxide in step (2) was 0.34 wt%.

**Preparation of polyamide 56 fiber**

The polyamide 56 resin prepared above was used as the raw material for spinning, and the specific spinning process was the same as Example 1.

**Example 3**

**Preparation of Polyamide 56 resin**

The polyamide 56 resin was prepared using essentially the same raw materials as Example 1, the difference only lied in that the in step (2), the vacuum degree was -0.07 MPa, the maintenance time was 10 minutes, and the addition amount of titanium dioxide in the step (2) was 0.35 wt%.

**Preparation of polyamide 56 fiber**

The polyamide 56 resin prepared above was used as the raw material for spinning, and the specific spinning process was the same as Example 1.

**Example 4**

**Preparation of Polyamide 56 resin**

The polyamide 56 resin was prepared using essentially the same raw materials and processes as Example 1, the difference only lied in that the addition amount of titanium dioxide in step (2) was 1.23 wt%, and the mesh size of the melt filter in the step (3) was 5 $\mu$m.

**Preparation of polyamide 56 fiber**

The polyamide 56 resin prepared above was used as the raw material for spinning, and the specific spinning process was the same as Example 1.

**Example 5**

**Preparation of Polyamide 56 resin**

The polyamide 56 resin was prepared using essentially the same raw materials and processes as Example 1, the difference only lied in that the addition amount of titanium dioxide in step (2) was 1.56 wt%, and the mesh size of the melt filter in the step (3) was 15 $\mu$m.

**Preparation of polyamide 56 fiber**

The polyamide 56 resin prepared above was used as the raw material for spinning, and the specific spinning process was the same as Example 1.

**Example 6**

**Preparation of Polyamide 56 resin**

The polyamide 56 resin was prepared using essentially the same raw materials and processes as Example 1, the difference only lied in that the addition amount of titanium dioxide in step (2) was 1.84 wt%.

**Preparation of polyamide 56 fiber**

The polyamide 56 resin prepared above was used as the raw material for spinning, and the specific spinning process was the same as Example 1.

**Example 7**

**Preparation of Polyamide 56 resin**

The polyamide 56 resin was prepared using essentially the same raw materials and processes as Example 1, the difference only lied in that the addition amount of titanium dioxide in step (2) was 2.56 wt%.

**Preparation of polyamide 56 fiber**

The polyamide 56 resin prepared above was used as the raw material for spinning, and the specific spinning process was the same as Example 1.

**Example 8**

**Preparation of Polyamide 56 resin**

The polyamide 56 resin was prepared using essentially the same raw materials and processes as Example 1, the difference only lied in that the addition amount of titanium dioxide in step (2) was 3.05 wt%.

**Preparation of polyamide 56 fiber**

The polyamide 56 resin prepared above was used as the raw material for spinning, and the specific spinning process was the same as Example 1.

**Example 9**

**Preparation of Polyamide 56 resin**

The polyamide 56 resin was prepared using essentially the same raw materials and processes as Example 1, the difference only lied in that the addition amount of titanium dioxide in step (2) was 4.05 wt%.

**Preparation of polyamide 56 fiber**

The polyamide 56 resin prepared above was used as the raw material for spinning, and the specific spinning process was the same as Example 1.

**Example 10**

**Preparation of Polyamide 56 resin**

The polyamide 56 resin was prepared using essentially the same raw materials and processes as Example 1, the difference only lied in that the addition amount of titanium dioxide in step (2) was 0.34 wt%, the reaction system was vacuumized to a vacuum degree of -0.06 MPa, and the temperature of the reaction system after the vacuumization was 285°C.

**Preparation of polyamide 56 fiber**

The polyamide 56 resin prepared above was used as the raw material for spinning, and the specific spinning process was the same as Example 1.

**Example 11**

**Preparation of Polyamide 56 resin**

The polyamide 56 resin was prepared using essentially the same raw materials and processes as Example 10, the difference only lied in that the addition amount of titanium dioxide in step (2) was 1.54 wt%.

**Preparation of polyamide 56 fiber**

The polyamide 56 resin prepared above was used as the raw material for spinning, and the specific spinning process was the same as Example 1.

**Example 12**

**Preparation of Polyamide 56 resin**

The polyamide 56 resin was prepared using essentially the same raw materials and processes as Example 10, the difference only lied in that the addition amount of titanium dioxide in step (2) was 2.53 wt%.

**Preparation of polyamide 56 fiber**

The polyamide 56 resin prepared above was used as the raw material for spinning, and the specific spinning process was the same as Example 1.

**Example 13**

**Preparation of polyamide 56 fiber**

The polyamide 56 resin prepared in Example 10 was used as the raw material for spinning, and the specific spinning process was essentially the same as Example 1, the difference only lied in that the spin pack comprised a non-woven fabric filter screen having a mesh size of 10 $\mu$m.

**Example 14**

**Preparation of polyamide 56 fiber**

The polyamide 56 resin prepared in Example 11 was used as the raw material for spinning, and the specific spinning process was essentially the same as Example 1, the difference only lied in that the spin pack comprised a non-woven fabric filter screen having a mesh size of 15 $\mu$m.

**Example 15**

**Preparation of polyamide 56 fiber**

The polyamide 56 resin prepared in Example 11 was used as the raw material for spinning, and the specific spinning process was essentially the same as Example 1, the difference only lied in that the spin pack comprised a non-woven fabric filter screen having a mesh size of 20 $\mu$m.

**Comparative example 1**

**Preparation of Polyamide 56 resin**

The polyamide 56 resin was prepared using essentially the same raw materials and processes as Example 2, the difference only lied in that in the step (3), no melt filter was used for filtration, and the polyamide 56 resin was directly obtained by pelletizing.

**Preparation of polyamide 56 fiber**

The polyamide 56 resin prepared above was used as the raw material for spinning, and the specific spinning process was the same as Example 1.

**Comparative example 2**

**Preparation of Polyamide 56 resin**

The polyamide 56 resin was prepared using essentially the same raw materials and processes as Example 5, the difference only lied in that in the step (3), no melt filter was used for filtration, and the polyamide 56 resin was directly obtained by pelletizing.

**Preparation of polyamide 56 fiber**

The polyamide 56 resin prepared above was used as the raw material for spinning, and the specific spinning process was the same as Example 1.

**Comparative example 3**

**Preparation of Polyamide 56 resin**

The polyamide 56 resin was prepared using essentially the same raw materials and processes as Example 7, the difference only lied in that in step (3), no melt filter was used for filtration, and the polyamide 56 resin was directly obtained by pelletizing.

**Preparation of polyamide 56 fiber**

The polyamide 56 resin prepared above was used as the raw material for spinning, and the specific spinning process was the same as Example 1.

**Comparative example 4**

**Preparation of polyamide 6 fiber**

The polyamide 6 resin (viscosity of 2.7, molecular weight distribution of 1.59, oligomer content of 0.61%, and moisture content of 612 ppm) was mixed with 0.33 wt% of titanium dioxide (particle size of 0.2 μm), the mixture was used as the spinning material for spinning with the same spinning process as Example 1 to obtain the polyamide 6 fiber; wherein the content of titanium dioxide was based on the mass of the polyamide 6 resin.

**Comparative example 5**

**Preparation of polyamide 66 fiber**

The polyamide 66 resin (viscosity of 2.68, molecular weight distribution of 1.61, oligomer content of 0.62%, and moisture content of 605 ppm) was mixed with 0.32 wt% of titanium dioxide (particle size of 0.2 μm), the mixture was used as the spinning material for spinning with the same spinning process as Example 1 to obtain the polyamide 66 fiber; wherein the content of titanium dioxide was based on the mass of the polyamide 66 resin.

**Comparative example 6**

**Preparation of polyamide 56 fiber**

The polyamide 56 resin (viscosity of 2.68, molecular weight distribution of 1.61, oligomer content of 0.61%, and moisture content of 607 ppm) was mixed with 0.26 wt% of titanium dioxide (particle size of 0.2 μm), the mixture was used as the spinning material for spinning with the same spinning process as Example 1 to obtain the polyamide 56 fiber; wherein the content of titanium dioxide was based on the mass of the polyamide 56 resin.

**Comparative example 7**

**Preparation of Polyamide 56 resin**

The polyamide 56 resin was prepared using essentially the same raw materials and processes as Example 5, the difference only lied in that the mesh size of the melt filter in the step (3) was 20 μm.

**Preparation of polyamide 56 fiber**

The polyamide 56 resin prepared above was used as the raw material for spinning, and the specific spinning process was the same as Example 1.

The relevant performance tests were conducted on the polyamide 56 resin prepared in Examples 1 to 12 and Comparative examples 1 to 3. The results are shown in Table 1.

Table 1 Performance of polyamide 56 resin in Examples (Ex.) and Comparative Examples (CEx.)

| Groups | Relative viscosity | Oligomer content (wt%) | Molecular weight distribution | Moisture content (ppm) | Measured titanium dioxide content in resin (wt%) | Particle size distribution of titanium dioxide (%) | | |
|---|---|---|---|---|---|---|---|---|
| | | | | | | 0.2~0.6 μm | 0.2~0.35 μm | > 0.6 μm |
| Ex. 1 | 2.55 | 0.62 | 1.61 | 600 | 0.25 | 99.5 | 96.5 | 0.5 |
| Ex. 2 | 2.54 | 0.61 | 1.60 | 592 | 0.31 | 99.4 | 96.6 | 0.6 |
| Ex. 3 | 2.56 | 1.2 | 1.62 | 597 | 0.32 | 98.2 | 95.8 | 1.8 |
| Ex. 4 | 2.55 | 0.60 | 1.61 | 603 | 1.21 | 99.0 | 96.5 | 1 |
| Ex. 5 | 2.54 | 0.60 | 1.60 | 605 | 1.52 | 98.8 | 96.3 | 1.2 |
| Ex. 6 | 2.53 | 0.59 | 1.59 | 600 | 1.81 | 98.6 | 96.0 | 1.4 |
| Ex. 7 | 2.55 | 0.61 | 1.62 | 594 | 2.51 | 98.5 | 95.8 | 1.5 |

(continued)

| Groups | Relative viscosity | Oligomer content (wt%) | Molecular weight distribution | Moisture conte nt (ppm ) | Measure d titanium dioxide content in resin (wt%) | Particle size distribution of titanium dioxide (%) | | |
|---|---|---|---|---|---|---|---|---|
| | | | | | | 0.2~0.6 $\mu$m | 0.2~0.35 $\mu$m | > 0.6 $\mu$m |
| Ex. 8 | 2.55 | 0.58 | 1.61 | 599 | 3.02 | 98.3 | 95.5 | 1.7 |
| Ex. 9 | 2.54 | 0.63 | 1.62 | 600 | 4.03 | 98.0 | 95.2 | 2 |
| Ex. 10 | 2.71 | 0.60 | 1.58 | 602 | 0.33 | 99.2 | 96.8 | 0.8 |
| Ex. 11 | 2.70 | 0.61 | 1.60 | 598 | 1.52 | 98.9 | 96.5 | 1.1 |
| Ex. 12 | 2.70 | 0.60 | 1.60 | 605 | 2.50 | 98.6 | 95.7 | 1.4 |
| CEx. 1 | 2.55 | 0.62 | 1.61 | 600 | 0.33 | 88.3 | 86.6 | 11.7 |
| CEx. 2 | 2.55 | 0.60 | 1.59 | 598 | 1.55 | 86.8 | 85.3 | 13.2 |
| CEx. 3 | 2.55 | 0.59 | 1.60 | 601 | 2.54 | 85.5 | 83.8 | 14.5 |

The relevant performance tests were conducted on the polyamide fiber prepared in Examples 1 to 15 and Comparative examples 1 to 7. The results are shown in Tables 2 and 3.

Table 2 Performance of polyamide fiber in Examples and Comparative Examples

| Groups | Filament fineness (dtex) | Breaking strength (cN/dtex ) | Coefficient of variation of breaking strength (%) | Initial modulus (cN/dtex) | Moisture regain (%) | Shrinkage in boiling water (%) | Crimp contraction (%) | Crimp stability (%) |
|---|---|---|---|---|---|---|---|---|
| Ex. 1 | 1.01 | 4.5 | 1.3 | 28.8 | 5.5 | 6.3 | 52.4 | 49.8 |
| Ex. 2 | 1.02 | 4.4 | 1.5 | 28.2 | 5.4 | 6.0 | 51.8 | 48.6 |
| Ex. 3 | 1.00 | 3.7 | 3.5 | 25.2 | 5.2 | 6.8 | 46.8 | 47.4 |
| Ex. 4 | 1.01 | 4.2 | 1.7 | 27.4 | 5.2 | 5.6 | 50.2 | 49.6 |
| Ex. 5 | 1.03 | 4.0 | 2.0 | 27.0 | 5.3 | 5.5 | 52.3 | 51.2 |
| Ex. 6 | 0.99 | 4.0 | 2.4 | 26.8 | 5.1 | 5.5 | 49.8 | 50.8 |
| Ex. 7 | 1.01 | 3.8 | 2.6 | 26.5 | 5.2 | 5.4 | 50.5 | 52.0 |
| Ex. 8 | 1.02 | 3.6 | 2.8 | 26.1 | 5.2 | 5.3 | 49.6 | 48.8 |
| Ex. 9 | 0.98 | 3.4 | 3.0 | 26.0 | 5.4 | 5.0 | 50.2 | 49.5 |
| Ex. 10 | 1.00 | 4.5 | 1.4 | 28.5 | 5.2 | 5.5 | 49.5 | 50.2 |
| Ex. 11 | 1.01 | 4.3 | 1.5 | 27.9 | 5.1 | 5.3 | 48.5 | 51.7 |
| Ex. 12 | 1.02 | 4.0 | 1.8 | 27.2 | 5.0 | 5.1 | 49.8 | 52.0 |
| Ex. 13 | 1.02 | 4.6 | 1.2 | 29.5 | 5.3 | 5.0 | 50.2 | 52.3 |
| Ex. 14 | 1.01 | 4.5 | 1.3 | 29.2 | 5.2 | 5.1 | 49.8 | 51.5 |
| Ex. 15 | 1.00 | 4.4 | 1.4 | 28.9 | 5.3 | 5.2 | 49.5 | 51.2 |
| CEx. 1 | 1.00 | 3.0 | 8.5 | 18.6 | 4.8 | 9.0 | 33.5 | 35.2 |
| CEx. 2 | 1.00 | 2.7 | 9.1 | 17.4 | 4.8 | 8.8 | 35.2 | 34.8 |
| CEx. 3 | 1.01 | 2.5 | 10.5 | 16.8 | 4.7 | 8.3 | 34.2 | 33.2 |
| CEx.4 | 1.00 | 3.6 | 7.5 | 28.2 | 4.5 | 8.5 | 33.4 | 34.0 |
| CEx. 5 | 1.02 | 3.8 | 8.2 | 27.4 | 4.1 | 8.0 | 34.2 | 35.8 |
| CEx. 6 | 1.01 | 3.9 | 6.2 | 26.0 | 4.7 | 7.5 | 36.8 | 38.8 |

(continued)

| Groups | Filament fineness (dtex) | Breaking strength (cN/dtex ) | Coefficient of variation of breaking strength (%) | Initial modulus (cN/dtex) | Moisture regain (%) | Shrinkage in boiling water (%) | Crimp contraction (%) | Crimp stability (%) |
|---|---|---|---|---|---|---|---|---|
| CEx. 7 | 1.04 | 3.5 | 8.0 | 19.0 | 4.8 | 8.0 | 32.4 | 31.2 |

Table 3 Performance of polyamide fiber in Examples and Comparative Examples

| Groups | Dyeing uniformity (grey scale) | M rate (%) | Fading fastnes s | Stainin g fastnes s | Monofilament breakage (times/2 4h) | Productio n yield of fiber (%) | Light transm ittance of fabric (%) | Grades of dulling perfor mance |
|---|---|---|---|---|---|---|---|---|
| Ex. 1 | 5.0 | 99.2 | 5 | 4-5 | 0 | 98.7 | 44.8 | 3 |
| Ex. 2 | 5.0 | 98.3 | 5 | 5 | 0 | 98.5 | 43.2 | 3 |
| Ex. 3 | 4.0 | 93.5 | 4-5 | 4-5 | 0 | 93.4 | 42.1 | 3 |
| Ex. 4 | 5.0 | 97.2 | 4-5 | 4-5 | 0 | 99.3 | 33.0 | 4 |
| Ex. 5 | 5.0 | 96.8 | 4-5 | 5 | 0 | 98.5 | 30.5 | 4 |
| Ex. 6 | 5.0 | 96.5 | 5 | 4-5 | 1 | 98.2 | 27.2 | 5 |
| Ex. 7 | 4.5 | 95.2 | 4-5 | 5 | 2 | 97.8 | 24.0 | 5 |
| Ex. 8 | 4.5 | 93.4 | 5 | 5 | 2 | 97.5 | 22.4 | 5 |
| Ex. 9 | 4.5 | 90.6 | 5 | 5 | 3 | 97.2 | 17.8 | 5 |
| Ex. 10 | 4.5 | 98.2 | 4-5 | 4-5 | 0 | 98.6 | 41.2 | 3 |
| Ex. 11 | 4.5 | 96.2 | 4-5 | 5 | 1 | 98.8 | 28.4 | 4 |
| Ex. 12 | 4.5 | 94.5 | 5 | 5 | 2 | 97.6 | 24.5 | 5 |
| Ex. 13 | 5.0 | 98.8 | 5 | 5 | 0 | 99.6 | 40.5 | 3 |
| Ex. 14 | 4.5 | 96.8 | 5 | 5 | 0 | 99.3 | 28.2 | 4 |
| Ex. 15 | 4.5 | 96.2 | 4-5 | 5 | 0 | 98.8 | 28.4 | 4 |
| CEx. 1 | 3.0 | 77.6 | 2-3 | 3 | 13 | 76.6 | 58.4 | 2 |
| CEx. 2 | 3.0 | 75.3 | 3 | 2-3 | 15 | 74.3 | 54.3 | 2 |
| CEx. 3 | 3.0 | 72.0 | 2-3 | 3 | 19 | 72.5 | 51.2 | 2 |
| CEx. 4 | 3.5 | 82.8 | 3 | 3 | 10 | 85.4 | 48.2 | 3 |
| CEx. 5 | 3.5 | 80.5 | 3 | 2-3 | 12 | 83.5 | 46.5 | 3 |
| CEx. 6 | 4.0 | 86.4 | 3-4 | 3-4 | 7 | 88.5 | 43.0 | 3 |
| CEx. 7 | 3.0 | 87.5 | 3-4 | 3-4 | 8 | 86.5 | 33.5 | 4 |

Unless otherwise limited, the terms as used in the present invention have the meanings commonly understood by those skilled in the art.

The embodiments described in the present invention are only for illustrative purposes and are not intended to limit the scope of protection of the present invention. Those skilled in the art may make various other substitutions, changes, and improvements within the scope of the present invention. Therefore, the present invention is not limited to the aforementioned embodiments and is limited only by the claims.

## Claims

1. A polyamide 56 resin comprising titanium dioxide in a content of 0.2 wt% to 5.0 wt%, wherein 98% or more of the titanium dioxide has a dispersed particle size of 0.2 ~ 0.6 $\mu$m.

2. The polyamide 56 resin according to claim 1, wherein 95% or more of the titanium dioxide has a dispersed particle size of 0.2 ~ 0.35 μm.

3. The polyamide 56 resin according to claim 1, wherein the titanium dioxide is contained in a content of 0.2 wt% to 0.4 wt%, 1.2 wt% to 2.0 wt%, or 2.5 wt% to 5.0 wt%.

4. The polyamide 56 resin according to claim 1, wherein the polyamide 56 resin has a relative viscosity of 2.3 ~ 3.0; and/or

   the polyamide 56 resin has a moisture content of 300 to 1000 ppm; and/or
   the polyamide 56 resin has a molecular weight distribution of 1.2 ~ 2.0; and/or
   the polyamide 56 resin has an oligomer content of 1.5 wt% or less.

5. A method for preparing a polyamide 56 resin comprising:

   preparing the polyamide 56 resin from monomers by a polymerization reaction,
   wherein the polyamide 56 resin comprises titanium dioxide, and the titanium dioxide is added during the polymerization reaction.

6. The method according to claim 5, wherein the monomers comprise 1,5-pentanediamine and adipic acid, and the polymerization reaction comprises the steps of:

   (1) preparing a polyamide 56 salt solution; and
   (2) carrying out polymerization using the polyamide 56 salt solution as a raw material to obtain a polyamide 56 melt;

   wherein titanium dioxide is added in step (1) and/or step (2).

7. The method according to claim 6, wherein step (2) comprises: heating the polyamide 56 salt solution to raise the polyamide 56 salt solution reaction system to a pressure of 0.3 ~ 2.4 MPa, maintaining the pressure for 0.2 ~ 2.5 hours by degassing, and then depressurizing the reaction system to a pressure of 0 ~ 0.3 MPa, then vacuumizing the reaction system to a vacuum degree of -0.001 ~ -0.08 MPa.

8. The method according to claim 7, wherein the reaction system has a temperature of 230 to 265°C at the end of pressure maintenance; and/or

   the reaction system has a temperature of 240 to 275°C at the end of depressurization; and/or
   the reaction system has a temperature of 250 to 285°C at the end of vacuumization; and/or
   the vacuum degree is maintained for a time period of 10 ~ 50 minutes after vacuumization.

9. The method according to claim 6, which comprises filtering, pelletizing, and drying the polyamide 56 melt to obtain the polyamide 56 resin.

10. A polyamide 56 fiber obtained by melt spinning the polyamide 56 resin prepared by the method of any one of claims 5 to 9 or the polyamide 56 resin of any one of claims 1 to 4, or by direct spinning the polyamide 56 melt prepared by the method of any one of claims 5 to 8.

11. The polyamide 56 fiber according to claim 10, wherein the polyamide 56 fiber has

   a filament fineness of 0.5 ~ 5.0 dtex; and/or
   a breaking strength of 3.3 ~ 5.5 cN/dtex; and/or
   an initial modulus of 15 ~ 35 cN/dtex; and/or
   a shrinkage in boiling water of 7% or less; and/or
   a moisture regain of 4.0% or more; and/or
   a crimp contraction of 35% ~ 60%, and a crimp stability of 38% ~ 58%; and/or
   a dyeing uniformity of 3.5 grade or more; and/or
   an M rate of 92% or more, and a fading fastness of 3.5 grade or more; and/or
   a staining fastness of 3.5 grade or more.

12. The polyamide 56 fiber according to claim 11, wherein it comprises one or more of undrawn yarn, fully drawn yarn, pre-oriented yarn, high oriented yarn, fully-oriented yarn, draw textured yarn, bulked continuous filament, staple fiber, monofilament, and industrial yarn, further preferably pre-oriented yarn and draw textured yarn.

13. A method for preparing the polyamide 56 fiber according to any one of claims 10 to 12, comprising the steps of:

(a) heating the polyamide 56 resin to a molten state to obtain a polyamide 56 melt;
(b) conveying the polyamide 56 melt into a spinning box, injecting it into a spin pack, and extruding it through a spinneret orifice to form an as-spun fiber;
(c) subjecting the as-spun fiber to a cooling treatment, an oiling treatment, a drawing treatment, and a winding treatment to obtain a polyamide 56 pre-oriented yarn; and
(d) subjecting the polyamide 56 pre-oriented yarn to a hot drawing treatment via a first roller, followed by cooling and setting, and then passing it through a false twister, a second roller, an interlacer, and subjecting it to an oiling treatment and a winding treatment to obtain the polyamide 56 fiber.

14. The method according to claim 13, wherein in step (a), the heating is carried out using a screw extruder, wherein zone 1 has a temperature of 245 ~ 265°C, zone 2 has a temperature of 260 ~ 280°C, zone 3 has a temperature of 275 ~ 285°C, and zone 4 has a temperature of 280 ~ 290°C, and/or
in step (b), the spinning box has a temperature of 278 ~ 290°C, and the spin pack has a pressure of 13 ~ 22 MPa.

15. The method according to claim 13, wherein in step (c), the cooling treatment is carried out by quench air cooling or cross air blow cooling, with an air temperature of 18 ~ 23°C and an air humidity of 50% ~ 85%; and/or

the oiling treatment is carried out by nozzle oiling with an oiling rate of 0.4 wt% to 0.6 wt%; and/or
the winding treatment is carried out at a winding speed of 4200 ~ 5000 m/min, and an overfeeding speed of 10 ~ 100 m/min.

16. The method according to claim 13, wherein in step (d), the hot drawing treatment is carried out at a draw ratio of 1.1 ~ 1.4, the hot drawing treatment is carried out at a temperature of 160 ~ 210°C; the false twister has a speed ratio D/Y of 1.3 ~ 2.2; compressed air inside the interlacer has a pressure of 0.3 ~ 1.5 MPa; the oiling treatment is carried out by nozzle oiling with an oiling rate of 2.2 wt% ~ 2.8 wt%; and the winding treatment is carried out at a winding speed of 300 ~ 800 m/min, and a winding overfeeding ratio during winding of 1% ~ 8%.

17. Use of the polyamide 56 fiber of any one of claims 10 to 12 or the polyamide 56 fiber prepared by the method of any one of claims 13 to 16 in knitted or woven fabrics.

## INTERNATIONAL SEARCH REPORT

| International application No. |
|---|
| **PCT/CN2021/140881** |

| A. | CLASSIFICATION OF SUBJECT MATTER |
|---|---|

C08L 77/06(2006.01)i; C08K 3/22(2006.01)i; D01F 6/90(2006.01)i; D01F 1/10(2006.01)i; C08G 69/28(2006.01)i; D01D 5/08(2006.01)i

According to International Patent Classification (IPC) or to both national classification and IPC

| B. | FIELDS SEARCHED |
|---|---|

Minimum documentation searched (classification system followed by classification symbols)

C08L77/06, C08K3/22, D01F6/90, D01F1/-, D01D

Documentation searched other than minimum documentation to the extent that such documents are included in the fields searched

Electronic data base consulted during the international search (name of data base and, where practicable, search terms used)

CNKI; CNABS; CNTXT; VEN; ISI WEB OF SCIENCE: 原位聚合, 聚酰胺, 锦纶, 尼龙, 56, 二氧化钛, TIO2, 钛白粉, 消光, 聚合, dulling, in-situ polymeriz+, extinction, nylon, polymide, TIO2, polymeriz+, titanium dioxide

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113736249 A (CATHAY BIOTECH INC. et al.) 03 December 2021 (2021-12-03) claims 1-17 | 1-17 |
| X | CN 113737307 A (CATHAY BIOTECH INC. et al.) 03 December 2021 (2021-12-03) description, paragraphs 0007-0095 | 1-17 |
| X | CN 106884217 A (SHANGHAI CATHAY BIOTECHNOLOGY RESEARCH CENTER CO., LTD. et al.) 23 June 2017 (2017-06-23) embodiments 4 and 6 | 1-3, 5-12, 17 |
| Y | CN 106884217 A (SHANGHAI CATHAY BIOTECHNOLOGY RESEARCH CENTER CO., LTD. et al.) 23 June 2017 (2017-06-23) embodiments 4 and 6 | 4, 13-16 |
| Y | CN 112680816 A (CATHAY BIOTECH INC. et al.) 20 April 2021 (2021-04-20) description, paragraphs 0010-0052 | 4, 13-16 |
| Y | CN 112410916 A (CATHAY BIOTECH INC. et al.) 26 February 2021 (2021-02-26) description, paragraphs 0010-0048 | 4, 13-16 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 April 2022** | **24 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/140881** |

### C. DOCUMENTS CONSIDERED TO BE RELEVANT

| Category* | Citation of document, with indication, where appropriate, of the relevant passages | Relevant to claim No. |
| --- | --- | --- |
| A | CN 1752125 A (LIAONING YINZHU CHEMICAL TEXTILE GROUP CO., LTD.) 29 March 2006 (2006-03-29)<br>entire document | 1-17 |
| A | CN 105504266 A (BEIJING INSTITUTE OF FASHION TECHNOLOGY) 20 April 2016 (2016-04-20)<br>entire document | 1-17 |
| A | CN 107653507 A (GUANGDONG DAHONGMA TEXTILE NEW MATERIAL CO., LTD.) 02 February 2018 (2018-02-02)<br>entire document | 1-17 |
| A | TW 201502337 A (CHAIN YARN CO., LTD.) 16 January 2015 (2015-01-16)<br>entire document | 1-17 |

Form PCT/ISA/210 (second sheet) (January 2015)

**INTERNATIONAL SEARCH REPORT**
Information on patent family members

International application No.

**PCT/CN2021/140881**

| Patent document cited in search report | | | Publication date (day/month/year) | Patent family member(s) | | | Publication date (day/month/year) |
|---|---|---|---|---|---|---|---|
| CN | 113736249 | A | 03 December 2021 | None | | | |
| CN | 113737307 | A | 03 December 2021 | None | | | |
| CN | 106884217 | A | 23 June 2017 | CN | 106884217 | B | 21 June 2019 |
| CN | 112680816 | A | 20 April 2021 | None | | | |
| CN | 112410916 | A | 26 February 2021 | WO | 2021031529 | A1 | 25 February 2021 |
| CN | 1752125 | A | 29 March 2006 | CN | 1326908 | C | 18 July 2007 |
| CN | 105504266 | A | 20 April 2016 | CN | 105504266 | B | 18 May 2018 |
| CN | 107653507 | A | 02 February 2018 | None | | | |
| TW | 201502337 | A | 16 January 2015 | TW | I506180 | B | 01 November 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105986327 A
- CN 110054891 A